Europäisches Patentamt
European Patent Office
Office européen des brevets

(19)

(11) Veröffentlichungsnummer: **0 100 528 A2**

(12) # EUROPÄISCHE PATENTANMELDUNG

(21) Anmeldenummer: 83107429.9

(22) Anmeldetag: 28.07.83

(51) Int. Cl.³: C 07 F 9/165
C 07 F 9/40, C 07 F 9/24
A 01 N 57/10, A 01 N 57/18
A 01 N 57/26

(30) Priorität: 31.07.82 DE 3228631

(43) Veröffentlichungstag der Anmeldung: 15.02.84 Patentblatt 84/7

(84) Benannte Vertragsstaaten: AT BE CH DE FR GB IT LI NL

(71) Anmelder: HOECHST AKTIENGESELLSCHAFT
Postfach 80 03 20
D-6230 Frankfurt am Main 80(DE)

(72) Erfinder: Stähler, Gerhard, Dr.
Loreleistrasse 87
D-6230 Frankfurt am Main 80(DE)

(72) Erfinder: Knauf, Werner, Dr.
Im Kirschgarten 24
D-6239 Eppstein/Taunus(DE)

(72) Erfinder: Sachse, Burkhard, Dr.
An der Ziegelei 30
D-6233 Kelkheim (Taunus)(DE)

(72) Erfinder: Waltersdorfer, Anna, Dr.
Rauenthaler Weg 28
D-6000 Frankfurt am Main 71(DE)

(54) **Neue (Di)-thiophosphor- und -phosphonsäure-Derivate, Verfahren zu ihrer Herstellung, sie enthaltende Mittel und ihre Verwendung im Pflanzenschutz.**

(57) Verbindungen der Formel I, worin

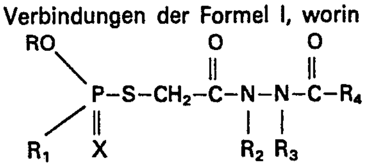

(I)

R = Alkyl, $R_1$ = Alkyl, Alkoxy, Alkylmercapto, Alkylamino oder Dialkylamino, $R_2$, $R_3$ = unabhängig voneinander H, Alkyl, Cycloalkyl, Benzyl oder Furylmethyl, $R_4$ = Alkyl, Alkoxymethyl-, Alkylmercaptomethyl oder Phenyl und X = Sauerstoff oder Schwefel bedeuten, besitzen wertvolle insektizide, akarizide und nematozide Eigenschaften.

EP 0 100 528 A2

Croydon Printing Company Ltd.

HOECHST AKTIENGESELLSCHAFT HOE 82/F 152 Dr. AU/Rt

# Neue (Di)-thiophosphor- und -phosphonsäure-Derivate, Verfahren zu ihrer Herstellung, sie enthaltende Mittel und ihre Verwendung im Pflanzenschutz

Vorliegende Erfindung betrifft neue (Di)-thiophosphor- und -phosphonsäure-Derivate der Formel (I), worin

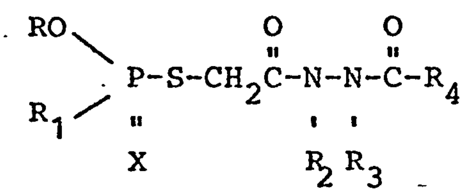

(I)

R = $(C_1-C_4)$-Alkyl,

$R_1$ = $(C_1-C_4)$-Alkyl, $(C_1-C_4)$-Alkoxy, $(C_1-C_4)$-Alkylmercapto, $(C_1-C_4)$-Alkylamino oder Di$(C_1-C_4$-Alkyl)-amino,

$R_2$, $R_3$ = unabhängig voneinander H, $(C_1-C_4)$-Alkyl, $(C_5-C_6)$-Cycloalkyl, Benzyl oder Furylmethyl

$R_4$ = $(C_1-C_4)$-Alkyl, $(C_1-C_3)$-Alkoxymethyl-, $(C_1-C_3)$-Alkyl-mercaptomethyl oder Phenyl und

X = Sauerstoff oder Schwefel bedeuten.

Bevorzugt sind hierbei solche Verbindungen der Formel I worin $R_1$ = $(C_1-C_4)$-Alkylamino oder Di$(C_1-C_4$Alkyl)-amino und $R_2$ sowie $R_4$ = $(C_1-C_4)$-Alkyl bedeuten.

Insbesondere bevorzugt sind Verbindungen der Formel I, worin $R_1$ = $(C_1-C_4)$Alkylamino, $R_2$ = $(C_1-C_4)$Alkyl, $R_3$ = Wasserstoff und $R_4$ = Methyl bedeuten.

Gegenstand vorliegender Erfindung ist weiterhin ein Verfahren zur Herstellung von Verbindungen der Formel I, dadurch gekennzeichnet, daß man Verbindungen der Formel II,

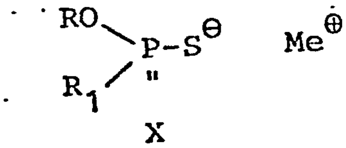

(II)

worin R, $R_1$ und X die Bedeutungen wie in Formel I besitzen und $Me^+$ ein Alkalimetallkation, inbesondere ein Natrium- oder Kaliumion, oder ein Ammonium bedeutet, mit einer Verbindung der Formel III,

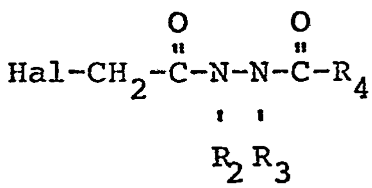

(III)

worin $R_2$, $R_3$ und $R_4$ die Bedeutung wie in Formel I besitzen und Hal für Halogen, vorzugsweise Chlor oder Brom steht, umsetzt.

Die Reaktion erfolgt im allgemeinen in Gegenwart von inerten Lösungsmitteln wie zum Beispiel niederen aliphatischen Alkoholen, wie Methanol oder Ethanol, Ketonen wie Aceton oder Methylethylketon, niederen Nitrilen, wie Acetonitril, Aromaten wie Toluol, Xylol, Chlorbenzol, oder Wasser bei Temperaturen zwischen Raumtemperatur und dem Siedepunkt des verwendeten Lösungsmittels, vorzugsweise zwischen 40° und 100°C.

Die Verbindungen werden als zähe Harze oder zähe, nicht destillierbare Öle erhalten, die durch Chromatographie gereinigt werden können.

Die Verbindungen der Formel III können durch Umsetzung von Verbindungen der Formel IV, die beispielsweise analog

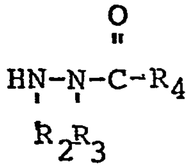

(IV)

dem in DE-PS 1 003 215 beschriebenen Verfahren hergestellt werden können und worin $R_2$, $R_3$ und $R_4$ die obengenannten Bedeutungen besitzen,

mit Halogenessigsäurechloriden der Formel V

$$Hal-CH_2-\underset{\underset{O}{\parallel}}{C}Cl \qquad (V)$$

worin Hal die Bedeutung wie in Formel III besitzt, in Gegenwart organischer Basen wie z.B. tertiäre organische Stickstoffbasen, insbesondere Pyridin oder Triethylamin, in inerten Lösungsmitteln hergestellt werden.

Die erfindungsgemäßen Verbindungen der Formel I haben eine ausgezeichnete Wirkung gegen saugende und beißende Insekten, gegen Akariden und gegen Nematoden. Daneben sind sie auch gegen Vorratsschädlinge sowie gegen Arten aus der Gruppe der Hygieneschädlinge wirksam. Bei der Anwendung gegen pflanzenschädigende Insekten, Milben und Nematoden zeichnen sich die Verbindungen der Formel I außer durch Kontakt- und Fraßgiftwirkung auch durch gute Pflanzenverträglichkeit und durch systemische Eigenschaften aus.

So können verschiedene Spinnmilbenarten, wie die Obstbaumspinnmilbe (Panonychus ulmi), die Citrusspinnmilbe (Panonychus citri) und die Bohnenspinnmilbe (Tetranychus urticae) gut bekämpft werden.

Unter den Schadinsekten mit saugenden und beißenden Mundwerkzeugen, die mit den erfindungsgemäßen Verbindungen bekämpft werden können seien genannt: Käfer, wie der Mexikanische Bohnenkäfer (Epilachna varivestis), Kartoffelkäfer (Leptinotarsa decemlineata), Erdfloh-Arten (Phyllotetra spp.), Erdbeerstengelstecher (Coenorrhinus germanicus), Erdbeerblütenstecher (Anthonomus rubi), Baumwollkapselkäfer (Anthonomus grandis), Drahtwürmer (Agriotes spec.); Schmetterlinge und deren Larven, wie der ägyptische und der altweltliche Baumwollkapselwurm (Earias insulana bzw. Heliothis armigera), Tabakknopsenwurm (Heliothis virescens), Wickler, insbesondere Apfelwickler (Carpocapsa pomonella), Eichwickler (Tortrix viridana), Fruchtschalenwickler (Adoxophyesreticulana), Knospenwickler (Hedya nubiferana), Traubenwickler (Eupoecilia ambiguella), Maiszünsler (Ostrinia nubilalis), Erdraupen (Agrotis spec.), Frostspanner (Operophthera brumata), Nonne (Lymantria monacha).

Außerdem Fliegen, wie die Rübenfliege (Pegmoya betae), Mittelmeerfruchtfliege (Ceratitis capitata) und Schaben, wie die Deutsche Schabe (Blatta germanica) und die orientalische Schabe (Blatta orientalis) sowie Blattläuse, wie die Schwarze Bohnenlaus (Doralis fabae), Grüne Pfirsichblattlaus (Myzus persicae) und Baumwollblattlaus (Aphis gossypii) und Wanzen, z.B. Baumwollwanzen (Oncopeltus fasciatus und Dysdercus spp.). Die Verbindungen der Formel I sind gegen alle oder einzelne Entwicklungsstadien normal sensibler und resistenter Arten wirksam.

Weiterhin haben die Verbindungen der Formel I eine ausgezeichnete Wirkung gegen pflanzenschädigende Nematoden, beispielsweise gegen solche der Gattungen Meloidogyne,

BAD ORIGINAL

Heterodera, Ditylenchus und Aphelenchoides.

Weiterhin zeigen die beanspruchten Verbindungen der Formel I eine gute fungizide, teilweise systemische Wirkung gegen phytopathogene Pilze. Die Verbindungen erfassen z.B. Phytophthora infestans, Plasmopara viticola, Pythium ultimum, Venturia inaequalis, Cercospora beticola, Echte Mehltaupilze, Piricularia oryzae und Rostpilze sowie insbesondere Rhizoctonia solani.

Gegenstand der Erfindung sind auch insektizide, akarizide, nematozide und fungizide Mittel, gekennzeichnet durch einen Gehalt an Verbindungen der Formel I neben den üblichen Formulierungshilfsmitteln und Inertstoffen sowie die Verwendung der Verbindungen zur Bekämpfung von phytopathogenen Pilzen, von Schadinsekten, pflanzenschädigenden Nematoden und Akariden.

Die erfindungsgemäßen Mittel enthalten die Wirkstoffe der Formel I, im allgemeinen zu 1 - 95 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

BAD ORIGINAL

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calzium-Salze wie Cadodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxethylen-sorbitan-Fettsäureester oder Polyoxethylen-sorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen wie Sand, Kaolinite, oder von granuliertem Inertmaterial. Auch können geeignete Wirkstoffe in der für die Herstellung von Düngemittelgranulaten üblichen Weise - gewünschtenfalls in Mischung mit Düngemitteln - hergestellt werden.

In Spritzpulvern variiert die Wirkstoffkonzentration z.B. zwischen etwa 10 % und 80 %, der Rest besteht aus den oben angegebenen Formulierungszusätzen. Bei emulgierbaren Konzentraten kann die Wirkstoffkonzentation gleichfalls etwa 10 % bis 80 % betragen. Staubförmige Formulierungen enthalten meistens 5 - 20 % an Wirkstoff, versprühbare Lösungen etwa 2 - 20 %. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Zur Anwendung werden die handelsüblichen Konzentrate ggf. in üblicher Weise verdünnt, z.B., bei Spritzpulvern und emulgierbaren Konzentraten mittels Wasser. Die spritzfertigen Suspensionen enthalten vorzugsweise 0,05 bis 2, insbesondere 0,1 bis 1 % Wirkstoff. Staubförmige und granulierte Zubereitungen sowie versprühbare Lösungen werden vor der Anwendung nicht mehr mit weiteren inerten Stoffen verdünnt. Die Aufwandmenge an erfindungsgemäßen Mitteln kann zwischen 2 g und 20 kg/ha Wirkstoff variieren.

Nachstehende Beispiele sollen die Erfindung näher erläutern:

BAD ORIGINAL

A) Herstellungsbeispiele

Beispiel 1

N-(O-Methyl-N-isopropylamidothiolophosphorylacetyl)-N-methyl-N'-acetylhydrazin

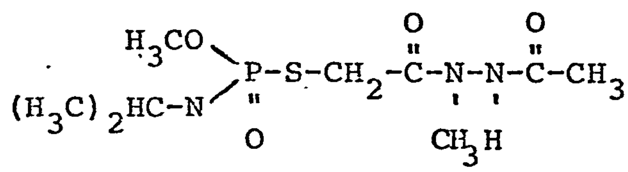

Eine Lösung von 18 g Kaliumsalz der O-Methyl-N-isopropylamido-thiophosphorsäure und 14 g N-Chloracetyl-N-Methyl-N'-acetylhydrazin in 150 ml Acetonitril wird 10 Minuten zum Sieden erhitzt. Das Lösungsmittel wird im Vakuum abdestilliert. Der salzhaltige Rückstand wird mit 100 ml Methylenchlorid aufgenommen, mit 50 ml Wasser ausgerührt und abgeschieden. Nach Abdestillieren des Lösungsmittels aus der organischen Phase bleiben 24 g N-(O-Methyl-N-isopropylamidothiolophosphorylacetyl)-N-methyl-N'-acetylhydrazin als bräunliches zähes Harz zurück mit folgenden Analysendaten

gef.: N 13,8 %; S 10,9 %
ber.: N 14,1 %; S 10,8 %

Beispiele 2 - 97

In analoger Weise wurden die in nachfolgender Tabelle aufgeführten Verbindungen hergestellt; wobei sich die Reste R, $R_1$ - $R_4$ und X auf Formel I beziehen.

BAD ORIGINAL

| Beispiel Nr. | R | $R_1$ | $R_2$ | $R_3$ | $R_4$ | X | Analyse gef. | Analyse ber. |
|---|---|---|---|---|---|---|---|---|
| 2 | $C_2H_5-$ | $CH_3NH-$ | $CH_3$ | H | $CH_3-$ | O | 14,6 % N<br>11,0 % S | 14,8 % N<br>11,3 % S |
| 3 | $C_2H_5-$ | $C_2H_5NH-$ | $CH_3$ | H | $CH_3-$ | O | 13,7 % N<br>10,6 % S | 14,1 % N<br>10,8 % S |
| 4 | $C_2H_5-$ | $n-C_3H_7NH-$ | $CH_3$ | H | $CH_3-$ | O | 13,2 % N<br>10,4 % S | 13,5 % N<br>10,3 % S |
| 5 | $C_2H_5-$ | $n-C_4H_9NH-$ | $CH_3$ | H | $CH_3-$ | O | 12,6 % N<br>10,1 % S | 12,9 % N<br>9,9 % S |
| 6 | $C_2H_5-$ | $i-C_4H_9NH-$ | $CH_3$ | H | $CH_3-$ | O | 12,5 % N<br>9,6 % S | 12,9 % N<br>9,9 % S |
| 7 | $CH_3-$ | $i-C_3H_7NH-$ | H | $CH_3-$ | $CH_3-$ | O | 13,7 % N<br>10,9 % S | 14,1 % N<br>10,8 % S |
| 8 | $C_2H_5-$ | $C_2H_5NH-$ | H | $CH_3-$ | $CH_3-$ | O | 13,8 % N<br>10,5 % S | 14,1 % N<br>10,8 % S |
| 9 | $C_2H_5-$ | $i-C_4H_9NH-$ | H | $CH_3-$ | $CH_3-$ | O | 12,5 % N<br>9,7 % S | 12,9 % N<br>9,9 % S |
| 10 | $C_2H_5-$ | $n-C_4H_9NH-$ | H | $CH_3-$ | $CH_3-$ | O | 12,4 % N<br>9,5 % S | 12,9 % N<br>9,9 % S |
| 11 | $C_2H_5-$ | $C_2H_5O-$ | H | $CH_3-$ | $CH_3-$ | S | 8,6 % N<br>20,1 % S | 8,9 % N<br>20,4 % S |
| 12 | $C_2H_5-$ | $n-C_3H_7S-$ | H | $CH_3-$ | $CH_3-$ | O | 8,2 % N<br>9,6 % S | 8,5 % N<br>9,8 % S |
| 13 | $C_2H_5-$ | $n-C_3H_7NH-$ | $C_2H_5-$ | H | $CH_3-$ | O | 12,5 % N<br>9,6 % S | 12,9 % N<br>9,9 % S |
| 14 | $C_2H_5-$ | $CH_3NH-$ | $C_2H_5-$ | H | $CH_3-$ | O | 14,0 % N<br>11,0 % S | 14,1 % N<br>10,8 % S |

BAD ORIGINAL

| Beispiel Nr. | R | $R_1$ | $R_2$ | $R_3$ | $R_4$ | X | Analyse gef. | ber. |
|---|---|---|---|---|---|---|---|---|
| 15 | $C_2H_5$- | $C_2H_3$-NH- | $C_2H_5$- | H | $CH_3$- | O | 13,1 % N<br>10,0 % S | 13,5 % N<br>10,3 % S |
| 16 | $C_2H_5$- | n-$C_4H_9$NH- | $C_2H_5$- | H | $CH_3$- | O | 12,4 % N<br>9,6 % S | 12,4 % N<br>9,4 % S |
| 17 | $C_2H_5$- | n-$C_3H_7$S- | $C_2H_5$- | H | $CH_3$- | O | 8,2 % N<br>18,5 % S | 8,2 % N<br>18,7 % S |
| 18 | $CH_3$- | i-$C_3H_7$NH- | n-$C_3H_7$- | H | $CH_3$- | O | 12,6 % N<br>10,1 % S | 12,9 % N<br>9,9 % S |
| 19 | $C_2H_5$- | i-$C_3H_7$NH- | n-$C_3H_7$- | H | $CH_3$- | O | 12,0 % N<br>9,2 % N | 12,4 % N<br>9,4 % S |
| 20 | $C_2H_5$- | $C_2H_5$NH- | n-$C_3H_7$- | H | $CH_3$- | O | 12,6 % N<br>9,6 % S | 12,9 % N<br>9,9 % S |
| 21 | $C_2H_5$- | i-$C_3H_7$NH- | n-$C_3H_7$- | H | $CH_3$- | O | 12,1 % N<br>8,8 % S | 11,9 % N<br>9,1 % S |
| 22 | $C_2H_5$- | n-$C_3H_7$NH- | n-$C_3H_7$- | H | $CH_3$- | O | 12,8 % N<br>9,0 % S | 12,4 % N<br>9,4 % S |
| 23 | $C_2H_5$- | n-$C_4H_7$NH- | n-$C_3H_7$- | H | $CH_3$- | O | 12,4 % N<br>9,2 % S | 12,4 % N<br>9,4 % S |
| 24 | $C_2H_5$- | n-$C_3H_7$S- | n-$C_2H_7$- | H | $CH_3$- | O | 7,8 % N<br>18,1 % S | 7,9 % N<br>18,0 % S |
| 25 | $C_2H_5$- | $C_2H_5$O- | n-$C_2H_7$- | H | $CH_3$- | O | 8,5 % N<br>10,0 % S | 8,6 % N<br>9,8 % S |
| 26 | $CH_3$- | i-$C_3H_7$NH- | i-$C_3H_7$- | H | $CH_3$- | O | 12,6 % N<br>10,1 % S | 12,9 % N<br>9,9 % S |
| 27 | $C_2H_5$- | $CH_3$NH- | i-$C_3H_7$- | H | $CH_3$- | O | 13,2 % N<br>10,5 % S | 13,5 % N<br>10,3 % S |

BAD ORIGINAL

| Beispiel Nr. | R | $R_1$ | $R_2$ | $R_3$ | $R_4$ | X | Analyse gef. | ber. |
|---|---|---|---|---|---|---|---|---|
| 28 | $C_2H_5-$ | $C_2H_5NH-$ | $i-C_3H_7-$ | H | $CH_3$ | O | 12,8 % N<br>9,6 % S | 12,9 % N<br>9,9 % S |
| 29 | $C_2H_5-$ | $n-C_3H_7NH-$ | $i-C_3H_7-$ | H | $CH_3$ | O | 12,5 % N<br>9,6 % S | 12,4 % N<br>9,4 % S |
| 30 | $C_2H_5-$ | $i-C_3H_7NH-$ | $i-C_3H_7-$ | H | $CH_3$ | O | 12,0 % N<br>9,2 % S | 12,4 % N<br>9,4 % S |
| 31 | $C_2H_5-$ | $i-C_4H_9NH-$ | $i-C_3H_7-$ | H | $CH_3$ | O | 11,6 % N<br>8,9 % S | 11,0 % N<br>9,1 % S |
| 32 | $C_2H_5-$ | $n-C_4H_9NH-$ | $i-C_3H_7-$ | H | $CH_3$ | O | 11,6 % N<br>8,8 % S | 11,9 % N<br>9,1 % S |
| 33 | $C_2H_5-$ | $C_2H_5O-$ | $i-C_3H_7-$ | H | $CH_3$ | O | 8,6 % N<br>9,7 % S | 8,6 % N<br>9,8 % S |
| 34 | $C_2H_5-$ | $C_2H_5-$ | $i-C_3H_7-$ | H | $CH_3$ | S | 8,8 % N<br>19,5 % S | 8,6 % N<br>19,7 % S |
| 35 | $CH_3-$ | $i-C_3H_7NH-$ | $n-C_4H_9-$ | H | $CH_3$ | O | 12,0 % N<br>9,1 % S | 12,4 % N<br>9,4 % S |
| 36 | $C_2H_5-$ | $CH_3NH-$ | $n-C_4H_9-$ | H | $CH_3$ | O | 12,5 % N<br>10,2 % S | 12,9 % N<br>9,9 % S |
| 37 | $C_2H_5-$ | $C_2H_5NH-$ | $n-C_4H_9-$ | H | $CH_3$ | O | 11,9 % N<br>9,5 % S | 12,4 % N<br>9,4 % S |
| 38 | $C_2H_5-$ | $n-C_3H_7NH-$ | $n-C_4H_9-$ | H | $CH_3$ | O | 11,5 % N<br>9,4 % S | 11,9 % N<br>9,1 % S |
| 39 | $C_2H_5-$ | $i-C_4H_9NH-$ | $n-C_4H_9-$ | H | $CH_3$ | O | 11,4 % N<br>8,5 % S | 11,4 % N<br>8,7 % S |
| 40 | $C_2H_5-$ | $C_2H_5O-$ | $n-C_4H_9-$ | H | $CH_3$ | S | 7,5 % N<br>18,2 % S | 7,9 % N<br>18,0 % S |
| 41 | $C_2H_5-$ | $n-C_3H_7S-$ | $n-C_4H_9-$ | H | $CH_3$ | O | 7,8 % N<br>17,4 % S | 7,6 % N<br>17,3 % S |

BAD ORIGINAL

| Bei-spiel Nr. | R | $R_1$ | $R_2$ | $R_3$ | $R_4$ | X | Analyse gef. | Analyse ber. |
|---|---|---|---|---|---|---|---|---|
| 42 | $C_2H_5-$ | $n-C_3H_7NH-$ | $i-C_4H_9-$ | H | $CH_3-$ | O | 11,6 % N<br>9,3 % S | 11,9 % N<br>9,1 % S |
| 43 | $C_2H_5-$ | $n-C_4H_9NH-$ | $i-C_4H_9-$ | H | $CH_3-$ | O | 11,2 % N<br>8,5 % S | 11,4 % N<br>8,7 % S |
| 44 | $C_2H_5-$ | $n-C_4H_9NH-$ | $i-C_4H_9-$ | H | $CH_3-$ | O | 11,4 % N<br>8,6 % S | 11,4 % N<br>8,7 % S |
| 45 | $CH_3-$ | $i-C_3H_7NH-$ | sec $C_4H_9-$ | H | $CH_3-$ | O | 12,7 % N<br>9,1 % S | 12,4 % N<br>9,4 % S |
| 46 | $CH_3-$ | $C_2H_5NH-$ | " | H | $CH_3-$ | O | 12,7 % N<br>10,1 % S | 12,9 % N<br>9,9 % S |
| 47 | $C_2H_5-$ | $i-C_3H_7NH-$ | " | H | $CH_3-$ | O | 11,5 % N<br>8,9 % S | 11,9 % N<br>9,1 % S |
| 48 | $C_2H_5-$ | $n-C_3H_7NH-$ | " | H | $CH_3-$ | O | 11,6 % N<br>9,3 % S | 11,9 % N<br>9,1 % S |
| 49 | $C_2H_5-$ | $i-C_4H_9NH-$ | " | H | $CH_3-$ | O | 11,1 % N<br>8,5 % S | 11,4 % N<br>8,7 % S |
| 50 | $i-C_4H_9-$ | $CH_3NH-$ | " | H | $CH_3-$ | O | 11,5 % N<br>8,9 % S | 11,9 % N<br>9,1 % S |
| 51 | $C_2H_5-$ | $i-C_3H_7NH-$ | $i-C_3H_7-$ | H | $C_2H_5-$ | O | 11,6 % N<br>9,2 % S | 11,9 % N<br>9,1 % S |
| 52 | $C_2H_5-$ | $CH_3NH-$ | $i-C_3H_7-$ | H | $C_2H_5-$ | O | 12,5 % N<br>9,7 % S | 12,9 % N<br>9,9 % S |
| 53 | $C_2H_5-$ | $C_2H_5O-$ | $i-C_3H_7-$ | H | $C_2H_5-$ | O | 7,6 % N<br>18,2 % S | 7,9 % N<br>18,0 % S |
| 54 | $CH_3-$ | $i-C_3H_7NH-$ | $C_2H_5-$ | H | $CH_3OCH_2$ | O | 11,9 % N<br>9,1 % S | 12,3 % N<br>9,4 % S |
| 55 | $C_2H_5-$ | $CH_3NH-$ | $C_2H_5-$ | H | " | O | 12,6 % N<br>9,9 % S | 12,8 % N<br>9,8 % S |

BAD ORIGINAL

| Beispiel Nr. | R | $R_1$ | $R_2$ | $R_3$ | $R_4$ | X | Analyse gef. | Analyse ber. |
|---|---|---|---|---|---|---|---|---|
| 56 | $C_2H_5-$ | $C_2H_5NH-$ | $C_2H_5-$ | H | $CH_3OCH_2-$ | O | 11,8 % N<br>9,6 % S | 12,3 % N<br>9,4 % S |
| 57 | $C_2H_5-$ | $n-C_2H_7NH-$ | $C_2H_5-$ | H | $CH_3OCH_2-$ | O | 11,6 % N<br>9,2 % S | 11,9 % N<br>9,0 % S |
| 58 | $C_2H_5-$ | $i-C_4H_9NH-$ | $C_2H_5-$ | H | $CH_3OCH_2-$ | O | 11,1 % N<br>8,9 % S | 11,4 % N<br>8,7 % S |
| 59 | $i-C_4H_9-$ | $CH_3NH-$ | $C_2H_5-$ | H | $CH_3OCH_2-$ | O | 11,6 % N<br>8,8 % S | 11,8 % N<br>9,0 % S |
| 60 | " | $CH_3NH-$ | $C_2H_5-$ | H | $CH_3OCH_2-$ | S | 7,4 % N<br>17,6 % S | 7,8 % N<br>17,9 % S |
| 61 | " | $n-C_3H_7S-$ | $C_2H_5-$ | H | $CH_3OCH_2-$ | O | 7,4 % N<br>16,9 % S | 7,5 % N<br>17,2 % S |
| 62 | $CH_3-$ | $i-C_3H_7NH-$ | $n-C_3H_7-$ | H | $CH_3OCH_2-$ | O | 11,0 % N<br>8,9 % S | 11,4 % N<br>8,7 % S |
| 63 | $C_2H_5-$ | $CH_3NH-$ | " | H | $CH_3OCH_2-$ | O | 12,0 % N<br>9,3 % S | 12,3 % N<br>9,4 % S |
| 64 | $C_2H_5-$ | $C_2H_5NH-$ | " | H | $CH_3OCH_2-$ | O | 11,6 % N<br>9,2 % S | 11,8 % N<br>9,0 % S |
| 65 | $C_2H_5-$ | $n-C_3H_6NH-$ | " | H | $CH_3OCH_2-$ | O | 11,6 % N<br>8,9 % S | 11,4 % N<br>8,7 % S |
| 66 | $C_2H_5-$ | $i-C_3H_7NH-$ | " | H | $CH_3OCH_2-$ | O | 10,8 % N<br>8,2 % S | 11,0 % N<br>8,4 % S |
| 67 | $C_2H_5-$ | $CH_3NH-$ | 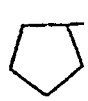 | H | $CH_3OCH_2-$ | O | 12,5 % N<br>9,9 % S | 12,5 % N<br>9,5 % S |

BAD ORIGINAL

| Beispiel Nr. | R | $R_1$ | $R_2$ | $R_3$ | $R_4$ | X | Analyse gef. | ber. |
|---|---|---|---|---|---|---|---|---|
| 68 | $C_2H_5-$ | $n-C_3H_7NH-$ | 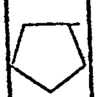 | H | $CH_3OCH_2-$ | O | 11,1 % N<br>8,5 % S | 11,5 % N<br>8,8 % S |
| 69 | $C_2H_5-$ | $C_2H_5O-$ | " | H | " | O | 7,8 % N<br>8,9 % S | 8,0 % N<br>9,1 % S |
| 70 | $C_2H_5-$ | $n-C_2H_7S-$ | " | H | " | O | 7,3 % N<br>16,9 % S | 7,3 % N<br>16,8 % S |
| 71 | $CH_3-$ | $i-C_3H_7NH-$ | 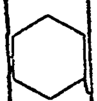 | H | $CH_3-$ | O | 11,3 % N<br>8,9 % S | 11,5 % N<br>8,8 % S |
| 72 | $C_2H_5-$ | $CH_3NH-$ | " | H | $CH_3-$ | O | 11,9 % N<br>9,3 % S | 12,0 % N<br>9,1 % S |
| 73 | $C_2H_5-$ | $C_2H_5NH-$ | " | H | $CH_3-$ | O | 11,1 % N<br>8,6 % S | 11,5 % N<br>8,8 % S |
| 74 | $C_2H_5-$ | $i-C_3H_7NH-$ | " | H | $CH_3-$ | O | 10,7 % N<br>8,1 % S | 11,1 % N<br>8,4 % S |
| 75 | $C_2H_5-$ | $C_2H_5O-$ | 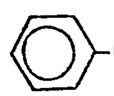$-CH_2-$ | H | $CH_3-$ | O | 7,9 % N<br>8,7 % S | 7,5 % N<br>8,6 % S |
| 76 | $C_2H_5-$ | $C_2H_5O-$ | " | H | $CH_3-$ | S | 7,5 % N<br>16,1 % S | 7,2 % N<br>16,4 % S |
| 77 | $C_2H_5-$ | $C_2H_5O-$ | 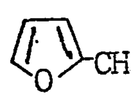$-CH_2-$ | H | $CH_3-$ | S | 7,0 % N<br>16,5 % S | 7,4 % N<br>16,8 % S |
| 78 | $C_2H_5-$ | $C_2H_5-$ | " | H | $CH_3-$ | S | 7,6 % N<br>18,0 % S | 8,0 % N<br>18,3 % S |

BAD ORIGINAL

| Beispie Nr. | R | $R_1$ | $R_2$ | $R_3$ | $R_4$ | X | Analyse gef. | Analyse ber. |
|---|---|---|---|---|---|---|---|---|
| 79 | $C_2H_5$ | $n-C_4H_9NH-$ | $n-C_2H_7-$ | H | $CH_3OCH_2-$ | O | 11,0 % N<br>8,2 % S | 11,0 % N<br>8,4 % S |
| 80 | $C_2H_5$ | $C_2H_5O-$ | $n-C_2H_7-$ | H | " | O | 8,1 % N<br>8,8 % S | 7,9 % N<br>9,0 % S |
| 81 | $C_2H_5$ | $C_2H_5O-$ | $n-C_2H_7-$ | H | " | S | 7,4 % N<br>17,0 % S | 7,5 % N<br>17,2 % S |
| 82 | $C_2H_5$ | $n-C_3H_7S-$ | $n-C_2H_7-$ | H | " | O | 7,5 % N<br>16,8 % S | 7,3 % N<br>16,6 % S |
| 83 | $CH_3-$ | $i-C_3H_7NH-$ | $i-C_3H_7-$ | H | " | O | 11,8 % N<br>8,8 % S | 11,5 % N<br>9,0 % S |
| 84 | $C_2H_5-$ | $CH_3NH-$ | $i-C_3H_7-$ | H | " | O | 11,9 % N<br>9,1 % S | 12,3 % N<br>9,4 % S |
| 85 | $C_2H_5-$ | $C_2H_5O-$ | $i-C_3H_7-$ | H | " | O | 8,0 % N<br>9,1 % S | 7,9 % N<br>9,0 % S |
| 86 | $C_2H_5-$ | $n-C_3H_7S-$ | $i-C_3H_7-$ | H | H | O | 7,4 % N<br>16,2 % S | 7,3 % N<br>16,6 % S |
| 87 | $CH_3-$ | $i-C_3H_7NH-$ | $n-C_4H_9-$ | H | " | O | 10,7 % N<br>8,8 % S | 11,4 % N<br>8,7 % S |
| 88 | $C_2H_5-$ | $CH_3NH-$ | $n-C_4H_9-$ | H | " | O | 11,6 % N<br>9,3 % S | 11,8 % N<br>9,0 % S |
| 89 | $C_2H_5-$ | $C_2H_5O-$ | $n-C_4H_9-$ | H | " | O | 7,6 % N<br>8,5 % S | 7,6 % N<br>8,7 % S |

BAD ORIGINAL

| Beispiel Nr. | R | $R_1$ | $R_2$ | $R_3$ | $R_4$ | X | Analyse gef. | Analyse ber. |
|---|---|---|---|---|---|---|---|---|
| 90 | $C_2H_5-$ | $n-C_3H_7S-$ | $n-C_4H_9-$ | H | H | O | 7,4 % N<br>15,8 % S | 7,0 % N<br>16,0 % S |
| 91 | $CH_3-$ | $i-C_3H_7NH-$ | sec.-$C_4H_9-$ | H | H | O | 11,7 % N<br>8,8 % S | 11,4 % N<br>8,7 % S |
| 92 | $C_2H_5-$ | $C_2H_5O-$ | " | H | H | O | 7,7 % N<br>8,5 % S | 7,6 % N<br>8,7 % S |
| 93 | $C_2H_5-$ | $n-C_3H_7S$ | " | H | H | O | 7,4 % N<br>16,8 % S | 7,3 % N<br>16,6 % S |
| 94 | $C_2H_5-$ | $CH_3NH-$ | $i-C_3H_7-$ | H | $CH_3SCH_2-$ | O | 12,1 % N<br>17,6 % S | 11,8 % N<br>17,9 % S |
| 95 | $C_2H_5-$ | $CH_3NH-$ | $n-C_3H_7-$ | H | 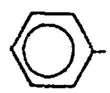 | O | 11,4 % N<br>8,6 % S | 11,8 % N<br>8,9 % S |
| 96 | $C_2H_5-$ | $n-C_3H_7NH-$ | $n-C_3H_7-$ | H | " | O | 10,4 % N<br>8,2 % S | 10,5 % N<br>8,0 % S |
| 97 | $C_2H_5-$ | $C_2H_5O-$ | $n-C_3H_7-$ | H | " | O | 7,3 % N<br>15,6 % S | 6,9 % N<br>15,8 % S |

BAD ORIGINAL

B) Formulierungsbeispiele

Beispiel A

Ein emulgierbares Konzentrat wird erhalten aus

| | | |
|---|---|---|
| | 15 Gew.-Teilen | Wirkstoff der Formel I |
| | 75 Gew.-Teilen | Cyclohexanon als Lösungsmittel |
| und | 10 Gew.-Teilen | Nonylphenolpolyglykolether (10 AeO)+) als Emulgator |

+) = Anzahl Ethylenoxideinheiten im Polyglykoletherrest

Beispiel B

Ein in Wasser leicht dispergierbares benetzbares Pulver wird erhalten, indem man

| | | |
|---|---|---|
| | 25 Gew.-Teile | Wirkstoff der Formel I |
| | 64 Gew.-Teile | Koalinhaltigen Quarz als Inertstoff |
| und | 1 Gew.-Teil | oleoylmethyltaurinsaures Natrium als Netz- und Dispergiermittel mischt und in einer Stiftmühle mahlt. |

Beispiel C

Ein Stäubemittel wird erhalten, indem man

| | | |
|---|---|---|
| | 10 Gew.-Teile | Wirkstoff der Formel I |
| und | 90 Gew.-Teile | Talkum als Inertstoff |

mischt und in einer Schlagmühle zerkleinert.

BAD ORIGINAL

Beispiel D

Ein Granulat wird erhalten durch Granulierung eines Gemisches aus

| | |
|---|---|
| 2 - 15 Gew.-Teilen | Wirkstoff der Formel I |
| und 98 - 85 Gew.-Teilen | inertem und gegebenenfalls Bindemittel enthaltendem Granulatträgermaterial, z.B. Attapulgit, Bimsgranulat, Quarzsand. |

BAD ORIGINAL

## C) Biologische Beispiele

### Beispiel I

Mit Bohnenspinnmilben (Tetranychus urticae, normal sensibel) stark befallene Bohnenpflanzen (Phaseolus vulgaris) wurden mit der wäßrigen Verdünnung eines Spritzpulverkonzentrates, die 0,025 Gew.-% des Wirkstoffs aus Beispiel I enthielt, bis zum Stadium des beginnenden Abtropfens gespritzt. Bei der mikroskopischen Kontrolle acht Tage nach der Behandlung zeigte sich, daß alle beweglichen und unbeweglichen Stadien der Population getötet waren.

In gleicher Weise geprüft, erwiesen sich die Verbindungen gemäß Beispiel 2, 3, 4, 7, 8, 11, 12, 13, 14, 15, 16, 17, 18, 19, 20, 24, 25, 26, 27, 28, 29, 30, 33, 34, 35, 36, 40, 41, 45, 46, 47, 52, 53, 54, 55, 56, 59, 60, 61, 62, 63, 69, 70, 76, 78, 80, 81, 82, 83, 84, 85, 86, 87, 90, 91, 92 und 93 als ebenso wirksam.

### Beispiel II

Mit Kundebohnenblattläusen (Aphis craccivora) stark besetzte Ackerbohnen (Vicia faba) wurden mit der wäßrigen Suspension eines Spritzpulverkonzentrates, die 0,0125 Gew.-% des Wirkstoffes aus Beispiel 2 enthielt, bis zum Stadium des Abtropfens gespritzt. Nach Aufstellung der Pflanzen im Gewächshaus wurde drei Tage nach der Behandlung eine 100 %ige Abtötung der Versuchstiere festgestellt. Ebenso wirksam erwiesen sich die Verbindungen gemäß Beispiel 3, 7, 8, 11, 12, 14, 15, 17, 24, 25, 27, 33, 34, 36, 40, 41, 45, 46, 47, 50, 55, 56, 57, 59, 60, 61, 62, 63, 69, 75, 77, 78, 80, 81, 82, 83, 84, 85, 86, 87, 88, 89, 91, 92 und 93.

### Beispiel III

Getopfte Ackerbohnen (Vicia faba), deren Wurzelballen mit Folie umhüllt waren, wurden nach erfolgter Infektion mit Bohnenspinnmilben (Tetranychus urticae) mit der zu prüfenden Verbindung in der Weise behandelt, daß mittels eines Glastrichters eine wäßrige Verdünnung des Emulsionskonzentrates (0,5 mg Wirkstoff) im Wurzelbereich gleichmäßig verteilt

BAD ORIGINAL

wurde. 8 Tage nach der Behandlung wurde mit den Verbindungen gemäß Beispiel 7, 11, 13, 14, 15, 17, 18, 24, 25, 26, 27, 28, 30, 34, 45, 46, 50, 52, 53, 54, 55, 59, 60, 61, 62, 78, 80, 82, 83, 84, 85, 86, 91 und 92 eine 100 %ige Mortalität erzielt.

Beispiel IV

Getopfte Ackerbohnen (Vicia faba), deren Wurzelballen mit Folie umhüllt waren, wurden nach erfolgter Infektion mit der Blattlaus Aphis craccivora mit der zu prüfenden Verbindung in der Weise behandelt, daß mittels eines Glastrichters eine wäßrige Verdünnung des Emulsionskonzentrates (1 mg Wirkstoff) im Wurzelbereich gleichmäßig verteilt wurde.
8 Tage nach der Behandlung wurde mit den Verbindungen gemäß Beispiel 2, 3, 8, 11, 14, 15, 17, 24, 34, 40, 45, 46, 55, 59, 60, 69, 75, 77, 78, 80, 84, 85, 88, 89 und 92 eine 100 %ige Mortalität erzielt.

Beispiel V

Eine staubförmige Formulierung wurde mit Erde gemischt, die mit Meloidogyne incognita verseucht war. Anschließend erfolgte das Abfüllen in Töpfe und die Bepflanzung dieser mit Tomaten. Nach einer Standzeit von 4 Wochen im Gewächshaus wurden die Wertzahlen nach folgendem Schema ermittelt:

| Gallen/Pflanze | Wertzahl |
|---|---|
| 0 | 1 |
| 1 - 2 | 2 |
| 3 - 5 | 3 |
| 6 - 10 | 4 |
| . | . |
| . | . |
| . | . |
| über 150 | 9 |

Bei einer eingemischten Wirkstoffmenge, die einer Aufwandmenge von 20 kg Wirkstoff/ha entspricht, erreichten die Verbindungen gemäß Beispiel 1, 3, 7, 8, 13, 15, 17, 18, 19, 20, 26, 27, 28, 30, 34, 35, 37, 41, 44, 45, 46, 47, 51 und 83 die Wertzahl 1.

BAD ORIGINAL

Beispiel VI

Auf die Innenseite des Deckels und des Bodens einer Petrischale wurden mittels einer Pipette 1 ml aus Beispiel 12 als Wirkstoff in Aceton mit einer Konzentration von 0,025 Gew.-% gleichmäßig aufgetragen und bis zur vollständigen Verdunstung des Lösungsmittels die Schale offen belassen. Danach wurden je 10 Stubenfliegen (Musca domestica) in die Petrischalen gesetzt, die Schalen mit dem Deckel verschlossen und nach 3 Stunden eine 100 % Abtötung der Versuchstiere festgestellt. Ebenso wirksam erwiesen sich die Verbindungen gemäß Beispiel 17, 24, 41, 61, 82, 86 und 90.

Beispiel VII

Wie im Beispiel VI beschrieben, wurde die Verbindung nach Beispiel 7 als Wirkstoff in Aceton mit einer Konzentration von 0,025 Gew.-% gleichmäßig auf die Innenseite des Deckels und des Bodens einer Petrischale aufgetragen und abtrocknen lassen. Danach wurden je Petrischale 10 Larven (L 4) der Deutschen Schabe (Blatella germanica) eingesetzt, die Schalen mit dem Deckel verschlossen und nach 72 Stunden eine 100 % Abtötung der Versuchstiere festgestellt. Ebenso wirksam erwiesen sich die Verbindungen gemäß Beispiel 8, 12, 17, 24, 41, 46, 53, 61, 82, 86, 90 und 93.

Beispiel VIII

Blätter der Baumwolle (Gossypium sp.) wurden mit einer wäßrigen Emulsion der Verbindung gemäß Beispiel 12 in einer Konzentration von 0,05 Gew.-%, bezogen auf Wirkstoff, besprüht (=600 l Spritzbrühe/ha) und ebenso behandelte Raupen (10 Stück, Stadium L 3-4) des gemeinen Baumwollwurms (Prodenia litura) hinzugesetzt. Blätter und Raupen wurden zusammen in Beobachtungskäfige gegeben und nach 48 Stunden eine 100 % Abtötung der Versuchstiere festgestellt. Ebenso wirksam erwiesen sich die Verbindungen gemäß dem Beispiel 17, 24, 41, 61, 82, 89, 90 und 93.

BAD ORIGINAL

Beispiel IX

Blätter der Bohne (Phaseolus vulgaris) wurden mit einer wäßrigen Emulsion der Verbindung aus Beispiel 3 in einer Konzentration von 0,025 Gew.-% (bezogen auf Wirkstoff) behandelt und zu gleich behandelten Larven des Mexikanischen Bohnenkäfers (Epilachna varivestis) in Beobachtungskäfige gestellt. Eine Auswertung nach 48 Stunden ergab eine 100 % Abtötung der Versuchstiere. Als gleichermaßen wirksam erwiesen sich die Verbindungen gemäß Beispiel 8, 17, 25, 33, 34, 41, 50, 53, 61, 62, 78, 82, 85, 90, 92 und 93.

BAD ORIGINAL

**Patentansprüche:**

1. Verbindungen der Formel I, worin

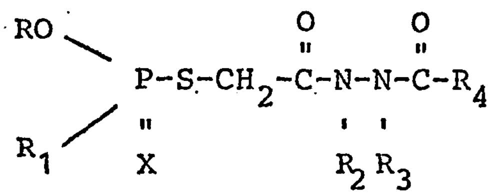

(I)

| | | |
|---|---|---|
| R | = | $(C_1-C_4)$-Alkyl, |
| $R_1$ | = | $(C_1-C_4)$-Alkyl, $(C_1-C_4)$-Alkoxy, $(C_1-C_4)$-Alkylmercapto, $(C_1-C_4)$-Alkylamino oder Di$(C_1-C_4$-Alkyl)-amino, |
| $R_2$, $R_3$ | = | unabhängig voneinander H, $(C_1-C_4)$-Alkyl, $(C_5-C_6)$-Cycloalkyl, Benzyl oder Furylmethyl, |
| $R_4$ | = | $(C_1-C_4)$-Alkyl, $(C_1-C_3)$-Alkoxymethyl-, $(C_1-C_3)$-Alkylmercaptomethyl oder Phenyl und |
| X | = | Sauerstoff oder Schwefel bedeuten. |

2. Verbindungen der Formel I von Anspruch 1, dadurch gekennzeichnet, daß

$R_1$ = $(C_1- C_4)$-Alkylamino oder Di$(C_1-C_4$Alkyl)amino sowie
$R_2$ und $R_4$ = $(C_1-C_4)$-Alkyl bedeuten.

3. Verfahren zur Herstellung von Verbindungen der Formel I gemäß Ansprüchen 1 und 2, dadurch gekennzeichnet, daß man Verbindungen der Formel (II)

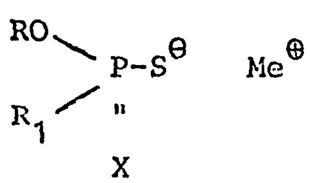

(II)

BAD ORIGINAL

worin R, $R_1$ und X die Bedeutungen wie in Formel I besitzen und $Me^{\oplus}$ ein Alkalimetallion oder ein Ammoniumion bedeutet, mit einer Verbindung der Formel III,

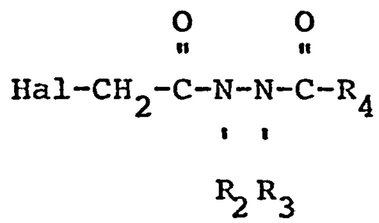

(III)

worin $R_2$, $R_3$ und $R_4$ die Bedeutungen wie in Formel I besitzen und Hal = Halogen bedeutet, ggf. in Gegenwart eines inerten Lösungsmittels umsetzt.

4. Insektizide, akarizide und nematozide Mittel, dadurch gekennzeichnet, daß sie eine Verbindung der Formel I gemäß Ansprüchen 1 und 2 als Wirkstoff und ggf. Formulierungshilfsmittel enthalten.

5. Verwendung von Verbindungen der Formel I gemäß Ansprüchen 1, 2 und 4 zur Schädlingsbekämpfung im Pflanzenschutz.

6. Verfahren zur Bekämpfung von Schadinsekten, Akariden und Nematoden, dadurch gekennzeichnet, daß man auf die befallenen Pflanzen eine wirksame Menge einer Verbindung der Formel I aufbringt.

BAD ORIGINAL

Patentansprüche: Österreich

1. Verfahren zur Herstellung von Verbindungen der Formel I, worin

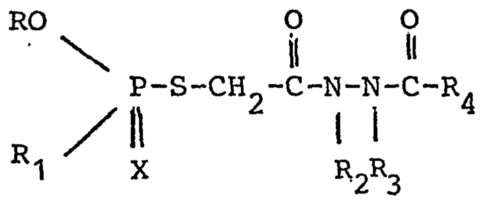

(I)

R = $(C_1-C_4)$-Alkyl,

$R_1$ = $(C_1-C_4)$-Alkyl, $(C_1-C_4)$-Alkoxy, $(C_1-C_4)$-Alkylmercapto, $(C_1-C_4)$-Alkylamino oder Di$(C_1-C_4$-Alkyl)-amino,

$R_2$, $R_3$ = unabhängig voneinander H, $(C_1-C_4)$-Alkyl, $(C_5-C_6)$-Cycloalkyl, Benzyl oder Furylmethyl,

$R_4$ = $(C_1-C_4)$-Alkyl, $(C_1-C_3)$-Alkoxymethyl-, $(C_1-C_3)$-Alkylmercaptomethyl oder Phenyl und

X = Sauerstoff oder Schwefel bedeuten,

dadurch gekennzeichnet, daß man Verbindungen der Formel (II)

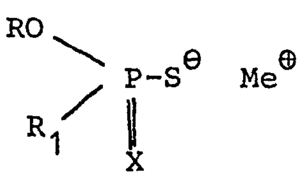

(II)

worin R, $R_1$ und X die Bedeutungen wie in Formel I besitzen und $Me^{\oplus}$ ein Alkalimetallion oder ein Ammoniumion bedeutet, mit einer Verbindung der Formel III,

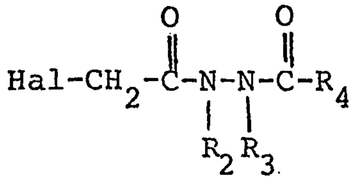

(III)

worin $R_2$, $R_3$ und $R_4$ die Bedeutungen wie in Formel I besitzen und Hal = Halogen bedeutet, ggf. in Gegenwart eines inerten Lösungsmittels umsetzt.

2. Verfahren gemäß Anspruch 1 zur Herstellung von Verbindungen der Formel I von Anspruch 1, worin

$R_1$ = $(C_1-C_4)$-Alkylamino oder Di$(C_1-C_4$Alkyl)amino sowie $R_2$ und $R_4$ = $(C_1-C_4)$-Alkyl bedeuten.

3. Insektizide, akarizide und nematozide Mittel, dadurch gekennzeichnet, daß sie eine Verbindung der Formel I gemäß Ansprüchen 1 und 2 als Wirkstoff und ggf. Formulierungshilfsmittel enthalten.

4. Verwendung von Verbindungen der Formel I gemäß Ansprüchen 1, 2 und 3 zur Schädlingsbekämpfung im Pflanzenschutz.